(19) Europäisches Patentamt

European Patent Office

Office européen des brevets

(11) **EP 1 180 896 B1**

(12) **EUROPEAN PATENT SPECIFICATION**

(45) Date of publication and mention
of the grant of the patent:
**15.03.2006 Bulletin 2006/11**

(51) Int Cl.:
***H04M 19/04*** (2006.01)

(21) Application number: **00117756.7**

(22) Date of filing: **17.08.2000**

(54) **Sound generating device and method for a mobile terminal of a wireless telecommuniation system**

Gerät und Verfahren zur Tönerzeugung für ein mobiles Endgerät in einem drahtlosen Telekommunikationssystem

Dispositif et méthode de génération de sons pour un terminal mobile dans un système de communication sans fil

(84) Designated Contracting States:
**AT BE CH CY DE DK ES FI FR GB GR IE IT LI LU MC NL PT SE**

(43) Date of publication of application:
**20.02.2002 Bulletin 2002/08**

(73) Proprietor: **Sony Deutschland GmbH**
**10785 Berlin (DE)**

(72) Inventor: **Lechner, Thomas,**
**Sony International (Europe) GmbH**
**Heisenbergbogen 1,**
**85609 Asheim (DE)**

(74) Representative: **Körber, Martin Hans et al**
**Mitscherlich & Partner**
**Patentanwälte**
**Sonnenstrasse 33**
**80331 München (DE)**

(56) References cited:
**EP-A- 0 795 845**       **WO-A-99/65221**
**GB-A- 2 339 644**       **US-A- 4 571 723**

**Description**

The present invention relates to a sound generating device and a sound generating method for a mobile terminal of a wireless telecommunication system.

Mobile terminals of wireless telecommunication systems, as e. g. the GSM or the UMTS system, usually comprise a sound unit for generating and outputting sounds, as e.g. melodies, to indicate an incoming phone call, a received message, a preset time and date, or the like to a user. In the first mobile terminals on the market, the sound generating unit only comprised a small number of prestored melodies and/or tones, from which the user could select his or her preferred ringer or alarm signal. Some of the more recent mobile terminals of wireless telecommunication systems present the possibility of creating an own melody within the limited range of one or two octaves, whereby the tone for the melody composed by the user is preset and cannot be selected by the user.

Document US 5 644 098 A describes a wave table type FM tone signal generator. The tone signal generator includes a waveform generator having a plurality of wave tables, a selector and an enveloper. The selector selects one of the wave tables in response to a number of selection signals. The selected wave table largely provides the waveform signal on being addressed largely by the phase angle address signal. Selection of the selected wave table varies with each selection signal. An enveloper impresses an envelope signal on the waveform signal. The envelope signal is used as a carrier or modulator for generating the FM tone signal. Document WO 99/65221 A describes a mobile phone comprising a ringtone generator controlled by tone-related digital parameters like frequency, duration of the tones, attack, decay, sustain, release.

The object of the present invention is therefore to provide a sound generating device and a sound generating method for a mobile terminal of a wireless telecommunication system, which enable a user to choose sounds and their pitch and thus to compose melodies in a simple but flexible way.

The above object is achieved by a sound generating device for a mobile terminal of a wireless telecommunication system according to claim 1, comprising memory means for storing waveforms, each waveform corresponding to a sound and each waveform comprising a predetermined number of samples, selecting means for selecting a sound and a pitch for said sound to be generated, calculating means for calculating on the basis of a preset calculation rule, a sound table from the samples of the waveform of a selected sound, reading means for reading out a part of the samples from said calculated sound table depending on the selected pitch for the sound, and output means for outputting a sound on the basis of the part of samples read out from said reading means.

The above object is further achieved by a sound generating method for a mobile terminal of a wireless telecommunication system according to claim 11, comprising the steps of selecting a sound and a pitch for a sound to be generated from stored waveforms, each stored waveform corresponding to a sound and each waveform comprising a predetermined number of samples, calculating, on the basis of a preset calculation rule, a sound table from the samples of the waveform of a selected sound, reading out a part of the samples from the calculated sound table depending on the selected pitch for said sound, and outputting a sound on the basis of the read out part of samples.

The sound generating device and the sound generating method according to the present invention enable a user to choose a sound to be generated and the pitch, in which the sound should be outputted, in a simple and flexible way. Thus, different melodies can be created and composed without necessitating large processing power. Further, the sound generating device and the sound generating method of the present invention allow a simple and cost-effective implementation in a mobile terminal of a wireless telecommunication system. The sounds stored in form of waveforms in the memory means can e.g. be the sound of a musical instrument, a human voice, an animal's sound or any other possible sound. Each sound has a certain typical frequency distribution, as e.g. a fundamental frequency and higher harmonics. Digitally sampling such a frequency distribution with a predetermined number of samples gives a waveform. Processing the stored waveforms according to the present invention thereby bases on a sampling rate converter principle.

Advantageously, each waveform consists of one period of samples of a frequency distribution of the sound to be generated. Further advantageously, each waveform consists of the predetermined number of 51 samples. The number of 51 samples is an optimised value in view of a minimalisation of resources for the implementation and a minimalisation of the frequency error in the outputted sound.

Further advantageously, the calculating means calculates the sound table on the basis of an interpolation calculation. This means that between respective two adjacent samples of the stored waveform an interpolation calculation is performed so that the waveform is upsampled. In this case, the number of calculated interpolated samples between two adjacent samples of the stored waveform depends on the selected pitch for the sound to be generated. In this way, an optimisation between implementation resources and frequency error can be achieved. Advantageously, the number of calculated interpolated samples is the same for each note of an octave, but decreases with ascending octaves. Hereby, for each note within one octave the same calculated sound table can be used so that the required processing is significantly reduced.

Further advantageously, the reading means reads out every n-th sample from the sound table, n being an integer number. This allows a further reduction of the processing required before outputting the selected sound. Advantageously, the number n depends on the selected pitch for the sound to be generated. Advantageously, the number n increases with ascending notes within an octave, but is the same for each respective note in the different octaves. This further decreases the storage and processing resources, since only a single number n has to be stored for each note in an octave. In different octaves, the same number n for each tone can be re-used. Further advantageously, the samples are read out from the sound table with a rate of about 8 kHz so that the highest frequency of the outputted sound can be 4 kHz.

The present invention is explained in more detail in the following description of a preferred embodiment thereof in relation to the enclosed drawings, in which

Figure 1 shows schematically a mobile terminal of a wireless telecommunication system comprising a sound generating device according to the present invention, and

Figure 2 shows a diagram explaining the generation of a sound according to the present invention.

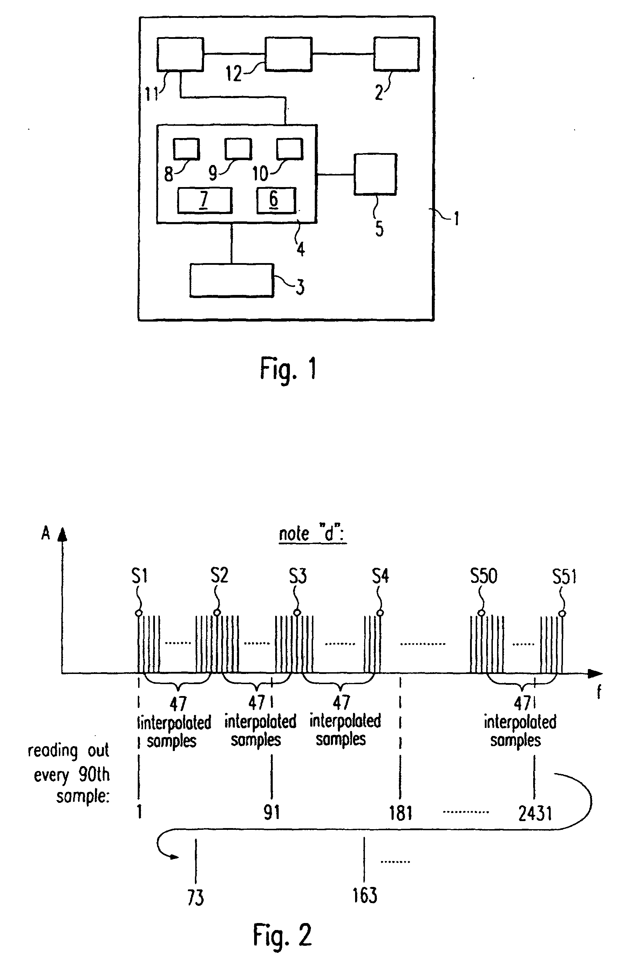

Figure 1 shows schematically a mobile terminal 1 for a wireless telecommunication system, as e.g. the GSM or the UMTS system. It is to be noted that in figure 1 only elements necessary for explaining the present invention are shown, whereas other elements necessary for the normal operation of the mobile terminal 1 in a wireless telecommunication system, such as antenna, HF part, modulator, demodulator, coder, decoder, etc. are not shown for the sake of clarity.

The mobile terminal 1 comprises a loudspeaker 2 for outputting audible signals to indicate an incoming call, a received message, a preset time and date or the like to a user. The loudspeaker 2 can either be the same loudspeaker which is used to output speech signals during a conversation to the user, or can be a separated loudspeaker only for outputting alarm or indication signals. In the second case, the loudspeaker 2 can be implemented as a simple and cheap element.

The mobile terminal 1 further comprises an input means 3, which can e.g. be the normal keyboard of the mobile terminal. By choosing a corresponding menu function of the mobile terminal, a user can choose or select a sound and a pitch for a sound which he uses to be generated and used as an alarm signal, indication signal or the like. The input means 3 is connected to a control unit 4 which controls the generation of the selected sound. The control unit 4 is connected to a memory means 5, which is e.g. a non-volatile memory, in which waveforms corresponding to sounds are stored. Each waveform corresponds to a certain sound, as e.g. the sound of an instrument, the sound of a human voice, the sound of an animal or the like, and comprises a predetermined number of samples. In the preferred embodiment, each waveform comprises a single period of a frequency distribution of a corresponding sound in form of a number of 51 digitised samples. The number of 51 samples for each waveform stored in the memory means 5 together with the specific values given below in tables 1 and 2 represent optimal values in view of an optimisation of processing resources in the mobile terminal and frequency error for the outputted sound. In this context it has to be noted that a word length of 8 bit is sufficient for the purpose of the output of alarm signals, indication signals, ringer tones and the like.

The user intending to select a sound and a pitch for an alarm signal or the like may input the selected sound or pitch by means of the input means 3. Alternatively, a sound and a pitch for a sound to be generated may be selected through any other selecting means, e.g. via transmission of a corresponding message from a base station of the wireless terminal communication system or the like. After the selection of a sound and a pitch for the sound to be generated, e.g. via input at the input means 3, a corresponding information is transmitted to the control unit 4. The control unit 4 comprises a calculating means 6 for calculating, on the basis of a preset calculation rule, a sound table from the samples of the waveform of a selected sound. In the preferred embodiment, the preset calculation rule is an interpolation calculation, whereby the number of calculated interpolated samples between two adjacent samples of the waveform depends on the selected pitch for the sound to be generated. Thereby, the number of calculated interpolated samples is the same for each note of an octave, but decreases with ascending octaves. Optimized values for the number of interpolated values per sample and a correspondingly resulting number of samples for the sound table in each octave are given in the following table 1.

Table 1

| Octave | c-h 262-494 Hz | c'-h' 524-988 Hz | c"-h" 1048-1976 Hz | c"'-h"' 2096-3952 Hz |
|---|---|---|---|---|
| No. of interpolated values per sample | 47 | 23 | 11 | 5 |
| No. of samples in sound table | 2448 | 1224 | 612 | 306 |

For the first octave c-h (262-494 Hz), the number of interpolated values per sample is 47, so that a total of (48x51=) 2048 samples are comprised in each respectively calculated sound table. For the second octave c'-h' (524-988 Hz), 23 values are interpolated per sample, so that a total (24x51=) 1224 samples are comprised in each calculated sound table. For the third octave c"-h" (1048-1976 Hz), 11 values are interpolated between two adjacent samples, so that a total of (12x51) 612 samples are comprised in each calculated sound table. For the third octave c"'-h"' (2096-3952 Hz), 5 values are interpolated between two adjacent samples, so that a total of (6x51 =) 306 samples are comprised in each calculated sound table. The number of interpolated values between two adjacent samples for each octave is about half of the value of the number of interpolated samples between two adjacent samples for the preceding octave. It is to be noted that higher pitches require a lower number of samples for a sound table due to the 4 kHz limitation (end of the fourth octave), so that memory space and processing power can be reduced in the higher frequency range. The 4 kHz limitation and the consequent sampling frequency of 8 kHz are the frequency limit and the sampling frequency, respectively, of digital mobile phones. Choosing the same frequency limit and sampling frequency has the advantage that the D/A converter of the mobile terminal intended for the output of the voice signal can also be used for the melody generation according to the present invention.

As the above-mentioned interpolation calculation for the calculation of the sound table, a linear, a polynomic or any other interpolation calculation may be used. Instead of an interpolation calculation, another way of calculating intermediate values between two adjacent samples of a selected waveform may be used.

A sound table calculated by the calculation means 6 is stored in a volatile memory 7 of the control unit 4, as e.g. a RAM memory. Thereafter, a sound table stored in the volatile memory 7 is read out by a reading means 8 also comprised in the control unit 4. Hereby, the reading means 8 reads out only a part of the samples of a sound table stored in the volatile memory 7. Thereby, the number of samples read out by the reading means 8 depends on the selected pitch for the sound to be outputted. In the preferred embodiment, the reading means 8 reads out every n-th sample from a sound table stored in the volatile memory 7, n being an integer number. Particularly, the number n increases with ascending notes within an octave, but is the same for each respective note in the different octaves, as shown in the following table 2.

Table 2

| note | c | c# | d | d# | e | f | f# | g | g# | a | a# | h |
|------|-----|-----|-----|-----|-----|-----|-----|-----|-----|-----|-----|-----|
| n | 80 | 85 | 90 | 95 | 101 | 107 | 113 | 120 | 127 | 135 | 143 | 151 |

For each note c in each octave, n equals 80, for each note c# in each octave, n equals 85 and so forth. The reading means 8 reads out every n-th sample from a sound table stored in the volatile memory 7 preferably by using a register as index to the sound table and incrementing the register by n for every read out value with subsequent reduction of the result modulo the length of the sound table so that periodic output sounds can be generated from a single period sound table. The reading means 8 uses a readout rate of about 8 kHz for reading out every n-th sample from a sound table stored in the volatile memory 7 and supplies the read samples to an output buffer 9 of the control unit 4. From the output buffer 19, the samples are supplied to an envelope means 10 for subjecting the samples to an amplitude envelope function in order to obtain a natural sound. The amplitude envelope function comprises e.g. an attack, a decay, a sustain and a release parameter upon which the natural sound of the generated waveform is based. These parameters can either be prestored or can be set by a user or by any other measure. The envelope means 10 is also part of the control unit 4. The correspondingly processed digital samples output from the envelope means 10 are supplied to a digital-to-analog converter 11 which converts the digital samples into analog signals. From the digital-to-analog converter 10, the analog signals are supplied to a power amplifier 12, which supplies the amplified signals to the loudspeaker 2, which in turn outputs the amplified signals as the selected sound in the selected pitch.

If more than one voice or sound is to be generated and output at a time, the above described processing is carried out in parallel in as many instances as voices are to be obtained. For example, a sound consisting of different voices and/or instruments can thereby be generated. In such a case, the obtained digital values are added and then output to the digital-to-analog converter 11 before being amplified and output.

The implementation of the sound generation according to the present invention as schematically shown in figure 1 can be implemented in different ways. One possibility is the implementation in special hardware like an integrated circuit containing a clock generator, registers for the waveform tables, logic circuitry for the interpolation and reading of the tables and digital-to-analog converters. Another possibility is to implement the sound generation functions in the digital signal processor of a mobile phone and use the digital-to-analog converter of the mobile phone used for outputting the normal voice signal to output the generated waveform or generated waveforms.

The numbers given in table 1 and table 2 and the number of 51 samples per stored waveform are optimised value in view of the reduction of memory and processing power and frequency error. For the given values, the frequency error is lower than 0.27% between 262 Hz (note c) and 3952 Hz (note h'''). Further, the given values lead to optimised frequency ratios for each single octave of the audible region of a human ear. Optimised frequency ratios for each octave means here that the ratio of $\sqrt[12]{2}$ for the frequencies of adjacent notes is realised very closely.

Figure 2 shows a diagram for explaining the sound generation according to the present invention by means of the example of the note d of the first octave, i.e. a note with the frequency 294 Hz, e.g. of the instrument Trombone. It is assumed that a single period of a waveform of the sound of the instrument Trombone is stored in the memory means 5 of the mobile terminal 1 shown in figure 1. The waveform comprises 51 samples, which are read out and processed by the calculating means 6 of the control unit 4 by calculating 47 interpolated values between each two adjacent samples S1, S2, ..., S51, so that a sound table with a total length of 2448 samples 1, 2, 3, ..., 2448 is created. The sound table is then stored in the volatile memory 7. The reading means 8 reads out every 90th sample from the sound table stored in the volatile memory 7 with a repetition rate of 8 kHz. As for example shown in figure 2, the samples 1, 91, 181, 271, ...., 2431, 73, 163, 253, ..., 2413, 55, 145, and so on are read out in a circular way so that a periodic Trombone tone with the note d is generated. If another sound like e.g. a flute or a violin is desired, the same procedure described above is performed with another set of 51 samples belonging to the chosen sound. Thus, the present invention allows to generate periodic signals with the frequencies of musical tones from stored single periods of waveforms in a simple but effective way.

## Claims

1.  Sound generating device for a mobile terminal of a wireless telecommunication system, with
    memory means (5) for storing sounds in the form of waveforms so that each waveform corresponds to a sound, whereby each sound has a typical frequency distribution and digitally sampling such a frequency distribution with a predetermined number of samples gives a waveform,
    selecting means (3) enabling the selection of a sound and a pitch for said selected sound ,
    calculating means (6) for calculating, on the basis of a preset calculation rule, a sound table from the samples of the stored waveform which corresponds to the selected sound,
    reading means (8) for reading out a part of the samples from said calculated sound table depending on said selected pitch for said selected sound, and
    output means (2) for outputting a sound on the basis of said part of samples read out from said reading means.

2.  Sound generating device according to claim 1,
    **characterized in,**
    **that** each waveform stored in said memory means (5) consists of one period of samples of the frequency distribution of the corresponding sound.

3.  Sound generating device according to claim 2,
    **characterized in,**
    **that** each waveform stored in said memory means (5) consists of 51 samples.

4.  Sound generating device according to claim 1,
    **characterized in,**
    **that** said calculating means (6) calculates said sound table on the basis of an interpolation calculation.

5.  Sound generating device according to claim 4,
    **characterized in,**
    **that** the number of calculated interpolated samples between two adjacent samples of said waveform depends on the selected pitch for the selected sound.

6.  Sound generating device according to claim 5,
    **characterized in,**
    **that** said number of calculated interpolated samples is the same for each note of an octave, but decreases with ascending octaves.

7.  Sound generating device according to one of the claims 1 to 6,
    **characterized in,**
    **that** said reading means (8) reads out every n-th sample from said sound table, n being an integer number.

8. Sound generating device according to claim 7,
**characterized in,**
**that** said number n depends on the selected pitch for said selected sound.

9. Sound generating device according to claim 8,
**characterized in,**
**that** said number n increases with ascending notes within an octave, but is the same for each respective note in the different octaves.

10. Sound generating device according to claim 9,
**characterized in,**
**that** said reading means (8) reads out the samples from the sound table with a rate of about 8 kHz.

11. Sound generating method for a mobile terminal of a wireless telecommunication system, comprising the steps of storing sounds in the form of waveforms so that each waveform corresponds to a sound, whereby each sound has a typical frequency distribution and digitally sampling such a frequency distribution with a predetermined number of samples gives a waveform,
enabling the selection of a sound and a pitch for said selected sound,
calculating, on the basis of a preset calculation rule, a sound table from the samples of the stored waveform which correspond to a selected sound,
reading out a part of the samples from said calculated sound table depending on said selected pitch for said selected sound, and
outputting a sound on the basis of said read out part of samples.

12. Sound generating method according to claim 11,
**characterized in,**
**that** each stored waveform consists of one period of samples of the frequency distribution of the corresponding sound.

13. Sound generating method according to claim 12,
**characterized in,**
**that** each stored waveform consists of 51 samples.

14. Sound generating method according to claim 11,
**characterized in,**
**that** in said calculating step said sound table is calculated on the basis of an interpolation calculation.

15. Sound generating method according to claim 14,
**characterized in,**
**that** the number of calculated interpolated samples between two adjacent samples of said waveform depends on the selected pitch for the selected sound.

16. Sound generating method according to claim 15,
**characterized in,**
**that** said number of calculated interpolated samples is the same for each note of an octave, but decreases with ascending octaves.

17. Sound generating method according to one of the claims 11 to 16,
**characterized in,**
**that** in said reading step every n-th sample is read out from said sound table, n being an integer number.

18. Sound generating method according to claim 17,
**characterized in,**
**that** said number n depends on the selected pitch for said selected sound.

19. Sound generating method according to claim 18,
**characterized in,**
**that** said number n increases with ascending notes within an octave, but is the same for each respective note in the different octaves.

**20.** Sound generating method according to claim 19,
**characterized in,**
**that** in said reading step the samples from the sound table are read out with a rate of about 8 kHz.


**Patentansprüche**

**1.** Tonerzeugungsvorrichtung für ein mobiles Endgerät eines drahtlosen Telekommunikationssystems,
mit einer Speichereinrichtung (5) zum Speichern von Tönen in Form von Wellenformen in der Weise, daß jede Wellenform einem Ton entspricht, wobei jeder Ton eine typische Frequenzverteilung hat und ein digitales Abtasten einer solchen Frequenzverteilung mit einer vorbestimmten Anzahl von Abtastproben eine Wellenform ergibt,
mit einer Auswahleinrichtung (3), die das Auswählen eines Tons und einer Tonhöhe für den ausgewählten Ton ermöglicht,
mit einer Recheneinrichtung (6) zum Berechnen einer Tontabelle aus den Abtastproben der gespeicherten Wellenform auf der Basis einer vorgegebenen Rechenregel, die dem ausgewählten Ton entspricht,
mit einer Leseeinrichtung (8) zum Auslesen eines Teils der Abtastproben aus der berechneten Tontabelle in Abhängigkeit von der ausgewählten Tonhöhe für den ausgewählten Ton und
mit einer Ausgabeeinrichtung (2) für die Ausgabe eines Tons auf der Basis des von der Leseeinrichtung ausgelesenen Teils von Abtastproben.

**2.** Tonerzeugungsvorrichtung nach Anspruch 1,
**dadurch gekennzeichnet,**
**daß** jede in der Speichereinrichtung (5) gespeicherte Wellenform aus einer Periode von Abtastproben der Frequenzverteilung des entsprechenden Tons besteht.

**3.** Tonerzeugungsvorrichtung nach Anspruch 3,
**dadurch gekennzeichnet,**
**daß** jede in der Speichereinrichtung (5) gespeicherte Wellenform aus 51 Abtastproben besteht.

**4.** Tonerzeugungsvorrichtung nach Anspruch 1,
**dadurch gekennzeichnet,**
**daß** die Recheneinrichtung (6) die Tontabelle auf der Basis einer Interpolationsrechnung berechnet.

**5.** Tonerzeugungsvorrichtung nach Anspruch 4,
**dadurch gekennzeichnet,**
**daß** die Zahl der berechneten interpolierten Abtastproben zwischen zwei benachbarten Abtastproben der Wellenform von der für den ausgewählten Ton ausgewählten Tonhöhe abhängt.

**6.** Tonerzeugungsvorrichtung nach Anspruch 5,
**dadurch gekennzeichnet,**
**daß** die Zahl der berechneten interpolierten Abtastproben für jede Note einer Oktav gleich ist, mit ansteigenden Oktaven jedoch kleiner wird.

**7.** Tonerzeugungsvorrichtung nach einem der Ansprüche 1 bis 6,
**dadurch gekennzeichnet,**
**daß** die Leseeinrichtung (8) jede Abtastprobe aus der Tontabelle ausliest, wobei n ganzzahlig ist.

**8.** Tonerzeugungsvorrichtung nach Anspruch 7,
**dadurch gekennzeichnet,**
**daß** die Zahl n von der ausgewählten Tonhöhe für den ausgewählten Ton abhängt.

**9.** Tonerzeugungsvorrichtung nach Anspruch 8,
**dadurch gekennzeichnet,**
**daß** Zahl n mit ansteigenden Noten innerhalb einer Oktave größer wird, für jede entsprechende Note in den verschiedenen Oktaven jedoch gleich ist.

**10.** Tonerzeugungsvorrichtung nach Anspruch 9,
**dadurch gekennzeichnet,**

**daß** die Leseeinrichtung (8) die Abtastproben aus der Tontabelle mit einer Rate von etwa 8 kHz ausliest.

11. Tonerzeugungsverfahren für ein mobiles Endgerät eines drahtlosen Telekommunikationssystems, mit den Verfahrensschritten:

Speichern von Tönen in Form von Wellenformen in der Weise, daß jede Wellenform einem Ton entspricht, wobei jeder Ton eine typische Frequenzverteilung hat und ein digitales Abtasten einer solchen Frequenzverteilung mit einer vorbestimmten Anzahl von Abtastproben eine Wellenform ergibt,
Ermöglichen der Auswahl eines Tons und einer Tonhöhe für den ausgewählten Ton,
Berechnen einer Tontabelle aus den Abtastproben der gespeicherten Wellenform auf der Basis einer vorgegebenen Rechenregel, die dem ausgewählten Ton entspricht,
Auslesen eines Teils der Abtastproben aus der berechneten Tontabelle in Abhängigkeit von der ausgewählten Tonhöhe für den ausgewählten Ton und
Ausgeben eines Tons auf der Basis des von der Leseeinrichtung ausgelesenen Teils von Abtastproben.

12. Tonerzeugungsverfahren nach Anspruch 11,
**dadurch gekennzeichnet,**
**daß** jede gespeicherte Wellenform aus einer Periode von Abtastproben der Frequenzverteilung des entsprechenden Tons besteht.

13. Tonerzeugungsverfahren nach Anspruch 12,
**dadurch gekennzeichnet,**
**daß** jede gespeicherte Wellenform aus 51 Abtastproben besteht.

14. Tonerzeugungsverfahren nach Anspruch 11,
**dadurch gekennzeichnet,**
**daß** die Tontabelle in dem Berechnungsschritt auf der Basis einer Interpolationsrechnung berechnet wird.

15. Tonerzeugungsverfahren nach Anspruch 14,
**dadurch gekennzeichnet,**
**daß** die Zahl der berechneten interpolierten Abtastproben zwischen zwei benachbarten Abtastproben der Wellenform von der für den ausgewählten Ton ausgewählten Tonhöhe abhängt.

16. Tonerzeugungsverfahren nach Anspruch 15,
**dadurch gekennzeichnet,**
**daß** die Zahl der berechneten interpolierten Abtastproben für jede Note einer Oktav gleich ist, mit ansteigenden Oktaven jedoch kleiner wird.

17. Tonerzeugungsverfahren nach einem der Ansprüche 11 bis 16,
**dadurch gekennzeichnet,**
**daß** in dem Ausleseschritt jede n-te Abtastprobe aus der Tontabelle ausgelesen wird, wobei n ganzzahlig ist.

18. Tonerzeugungsverfahren nach Anspruch 17,
**dadurch gekennzeichnet,**
**daß** die Zahl n von der ausgewählten Tonhöhe für den ausgewählten Ton abhängt.

19. Tonerzeugungsverfahren nach Anspruch 18,
**dadurch gekennzeichnet,**
**daß** Zahl n mit ansteigenden Noten innerhalb einer Oktave größer wird, für jede entsprechende Note in den verschiedenen Oktaven jedoch gleich ist.

20. Tonerzeugungsverfahren nach Anspruch 19,
**dadurch gekennzeichnet,**
**daß** in dem Ausleseschritt die Abtastproben aus der Tontabelle mit einer Rate von etwa 8 kHz ausgelesen werden.

**EP 1 180 896 B1**

**Revendications**

1. Dispositif de génération de son pour un terminal mobile d'un système de télécommunication sans fil, avec
un moyen de mémoire (5) pour stocker des sons sous la forme de formes d'onde de telle sorte que chaque forme d'onde corresponde à un son et ainsi, chaque son présente une distribution de fréquences typique, et un échantillonnage numérique d'une telle distribution de fréquences moyennant un nombre prédéterminé d'échantillons donne une forme d'onde,
un moyen de sélection (3) qui permet la sélection d'un son et d'une hauteur de son pour ledit son sélectionné,
un moyen de calcul (6) pour calculer, sur la base d'une règle de calcul préétablie, une table de sons à partir des échantillons de la forme d'onde stockée qui correspond au son sélectionné,
un moyen de lecture (8) pour lire une partie des échantillons à partir de ladite table de sons calculée en fonction de ladite hauteur de son sélectionnée pour ledit son sélectionné, et
un moyen de sortie (2) pour émettre en sortie un son sur la base de ladite partie d'échantillons qui est lue à partir dudit moyen de lecture.

2. Dispositif de génération de son selon la revendication 1, **caractérisé en ce que** chaque forme d'onde qui est stockée dans ledit moyen de mémoire (5) est constituée par une période d'échantillons de la distribution de fréquences du son correspondant.

3. Dispositif de génération de son selon la revendication 2, **caractérisé en ce que** chaque forme d'onde qui est stockée dans ledit moyen de mémoire (5) est constituée par 51 échantillons.

4. Dispositif de génération de son selon la revendication 1, **caractérisé en ce que** ledit moyen de calcul (6) calcule ladite table de sons sur la base d'un calcul d'interpolation.

5. Dispositif de génération de son selon la revendication 4, **caractérisé en ce que** le nombre d'échantillons interpolés calculés entre deux échantillons adjacents de ladite forme d'onde dépend de la hauteur de son sélectionnée pour le son sélectionné.

6. Dispositif de génération de son selon la revendication 5, **caractérisé en ce que** ledit nombre d'échantillons interpolés calculés est le même pour chaque note d'un octave mais diminue lorsque les octaves sont ascendants.

7. Dispositif de génération de son selon l'une des revendications 1 à 6, **caractérisé en ce que** ledit moyen de lecture (8) lit chaque n-ième échantillon à partir de ladite table de sons, n étant un nombre entier.

8. Dispositif de génération de son selon la revendication 7, **caractérisé en ce que** ledit nombre n dépend de la hauteur de son sélectionnée pour ledit son sélectionné.

9. Dispositif de génération de son selon la revendication 8, **caractérisé en ce que** ledit nombre n augmente avec les notes ascendantes à l'intérieur d'un octave mais est le même pour chaque note respective dans les différents octaves.

10. Dispositif de génération de son selon la revendication 9, **caractérisé en ce que** ledit moyen de lecture (8) lit les échantillons à partir de la table de sons moyennant une fréquence d'environ 8 kHz.

11. Procédé de génération de son pour un terminal mobile d'un système de télécommunication sans fil, comprenant les étapes de :

    stockage de sons sous la forme de formes d'onde de telle sorte que chaque forme d'onde corresponde à un son et ainsi, chaque son présente une distribution de fréquences typique, et un échantillonnage numérique d'une telle distribution de fréquences moyennant un nombre prédéterminé d'échantillons donne une forme d'onde,
    validation de la sélection d'un son et d'une hauteur de son pour ledit son sélectionné,
    calcul, sur la base d'une règle de calcul préétablie, d'une table de sons à partir des échantillons de la forme d'onde stockée qui correspondent à un son sélectionné,
    lecture d'une partie des échantillons à partir de ladite table de sons calculée en fonction de ladite hauteur de son sélectionnée pour ledit son sélectionné, et
    émission en sortie d'un son sur la base de ladite partie d'échantillons lue.

**12.** Procédé de génération de son selon la revendication 11, **caractérisé en ce que** chaque forme d'onde stockée est constituée par une période d'échantillons de la distribution de fréquences du son correspondant.

**13.** Procédé de génération de son selon la revendication 12, **caractérisé en ce que** chaque forme d'onde stockée est constituée par 51 échantillons.

**14.** Procédé de génération de son selon la revendication 11, **caractérisé en ce que**, au niveau de ladite étape de calcul, ladite table de sons est calculée sur la base d'un calcul d'interpolation.

**15.** Procédé de génération de son selon la revendication 14, **caractérisé en ce que** le nombre d'échantillons interpolés et calculés entre deux échantillons adjacents de ladite forme d'onde dépend de la hauteur de son sélectionnée pour le son sélectionné.

**16.** Procédé de génération de son selon la revendication 15, **caractérisé en ce que** ledit nombre d'échantillons interpolés et calculés est le même pour chaque note d'un octave mais diminue avec des octaves ascendants.

**17.** Procédé de génération de son selon l'une des revendications 11 à 16, **caractérisé en ce que**, au niveau de ladite étape de lecture, chaque n-ième échantillon est lu à partir de ladite table de sons, n étant un nombre entier.

**18.** Procédé de génération de son selon la revendication 17, **caractérisé en ce que** ledit nombre n dépend de la hauteur de son sélectionnée pour ledit son sélectionné.

**19.** Procédé de génération de son selon la revendication 18, **caractérisé en ce que** ledit nombre n augmente avec les notes ascendantes à l'intérieur d'un octave mais est le même pour chaque note respective dans les différents octaves.

**20.** Procédé de génération de son selon la revendication 19, **caractérisé en ce que**, au niveau de ladite étape de lecture, les échantillons en provenance de la table de sons sont lus moyennant une fréquence d'environ 8 kHz.

Fig. 1

note "d":

reading out
every 90th
sample:

Fig. 2